# EUROPÄISCHE PATENTANMELDUNG

(11) **EP 4 549 506 A1**
(43) Veröffentlichungstag der Anmeldung: **07.05.2025**
(21) Anmeldenummer: 23207831.1
(22) Anmeldetag: 06.11.2023
(51) Int. Cl.: C08K 5/5333, C09K 21/12, C07F 9/40

(54) **VERFAHREN ZUR HERSTELLUNG VON DIETHYLHYDROXYMETHYLPHOSPHONAT**

(71) Anmelder: LANXESS Deutschland GmbH, 50569 Köln (DE)
(72) Erfinder: HANSEL, Herr Jan-Gerd, 51469 Bergisch Gladbach (DE)

(57) **Zusammenfassung**

Die vorliegende Erfindung betrifft ein Verfahren zur Herstellung von Diethylhydroxymethylphosphonat mit hoher Reinheit durch Umsetzung von Diethylphosphit mit wässriger Formaldehydlösung in Gegenwart einer Base ausgewählt aus Natriumcarbonat, Kaliumcarbonat, Natriumphosphat und Kaliumphosphat in einer Menge von 2 bis 4 mol-% bezogen auf die eingesetzte Menge DEPI die dadurch erhältlichen Zusammensetzungen und deren Verwendungen.

## Beschreibung

Diethylhydroxymethylphosphonat (DEHMP, CAS-Nr. 3084-40-0) ist eine organische Phosphorverbindung, die in vielfältigen industriellen Anwendungen eingesetzt wird. So wird DEHMP für die Herstellung des Synthesebausteins Diethyl-p-tosyloxymethylphosphonat (DETMP, CAS-Nr. 31618-90-3, siehe z. B. US 5,514,798) benötigt. Dieser wiederum ermöglicht die Synthese verschiedener Pharmazeutika, wie beispielsweise die antiviralen Wirkstoffe Cidofovir, Tenofovir und Adefovir sowie ihrer jeweiligen Derivate und Prodrugs. Ähnliche DEHMP-Derivate wurden als Herbizide vorgeschlagen (siehe z. B. EP 0 511 826 A2). Weiterhin kann DEHMP zur Herstellung flammwidriger Materialien, wie zum Beispiel Polyurethane (US 3,385,801), Baumwollfasern (US 3,726,639) oder Phenolharze (DE 24 43 074 A1) dienen. DEHMP wurde auch als Komponente einer aschefreien Schmierölzubereitung vorgeschlagen (WO 2016170707 A1).

Zur Synthese von DEHMP wird im Stand der Technik die Umsetzung von Diethylphosphit (DEPI, CAS-Registry-Nummer 762-04-9) mit Formaldehyd bevorzugt. Reiner Formaldehyd ist jedoch unter Standardbedingungen ein gefährliches, zur Polymerisation neigendes Gas und wird daher bevorzugt in Form seiner Lösungen oder seiner Oligo- oder Polymere in Reaktionen eingesetzt. Oligo- oder Polymere des Formaldehyds, insbesondere Paraformaldehyd (CAS-Registry-Nummer 30525-89-4), stehen im Gleichgewicht mit Formaldehyd. Die Oligo- oder Polymere des Formaldehyds werden daher wie auch Formaldehydlösungen im Rahmen dieser Erfindung als Formaldehydquelle bezeichnet und sind als Rohstoffe zur Synthese von DEHMP einsetzbar.

Wenn die DEHMP-Synthese aus DEPI und einer Formaldehydquelle ohne zusätzlichen Katalysator durchgeführt wird, sind lange Reaktionszeiten von mehreren Tagen (siehe US 2,494,862) erforderlich. Technisch sinnvoll umsetzbare Synthesen werden daher ausschließlich in Gegenwart eines basischen Katalysators durchgeführt. Es sind verschiedene Verfahren zur Durchführung dieser Synthese bekannt geworden, die sich in der Art der Formaldehydquelle, der Art des basischen Katalysators und in den Verfahrensbedingungen unterscheiden.

Unter den verschiedenen Verfahren, die zur Durchführung dieser Synthese bekannt geworden sind, sind die Verfahren unter Verwendung von Paraformaldehyd als Formaldehydquelle und von Trialkylaminen als Base in Substanz (siehe z. B. EP 0 511 826 A2) bzw. in einem organischen Lösungsmittel, wie zum Beispiel Toluol (siehe z. B. US 5,514,798), an erster Stelle zu nennen.

Nachteilig an diesen Methoden ist zunächst die Verwendung von Paraformaldehyd als Formaldehydquelle. Paraformaldehyd wird industriell aus wässriger Formaldehydlösung durch Eindampfen im Vakuum gewonnen. Dieser Schritt ließe sich einsparen, wenn man DEHMP direkt aus wässriger Formaldehydlösung herstellen könnte. Darüber hinaus ist die Handhabung des Feststoffs Paraformaldehyd im technischen Maßstab in Hinblick auf Arbeitshygiene und Dosiertechnik wesentlich aufwändiger als die Handhabung flüssiger Formaldehydlösungen in geschlossenen Rohleitungen.

Weiterhin machen in diesen Verfahren die hohen Kosten für das Trialkylamin dessen Abtrennung und Rückgewinnung erforderlich. Zudem sind viele Trialkylamine giftig, beispielsweise ist Triethylamin giftig bei Hautkontakt oder Einatmen. Die Verwendung solcher Stoffe verursacht also unerwünschten Mehraufwand für Recycling und Arbeitsschutzmaßnahmen und kann wegen möglicher Kontamination des Reaktionsproduktes unerwünscht sein.

Es hat daher nicht an Versuchen gefehlt, die DEHMP-Synthese durch die Verwendung von wässriger Formaldehydlösung und von billigeren Basen einfacher und wirtschaftlicher zu gestalten. Nach WO 2006003295 A1 wird DEPI mit wässriger Formaldehydlösung in Gegenwart von Metallhydroxiden, Alkalimetallmonohydrogenphosphaten, Alkalimetallphosphaten oder Alkalimetallacetaten durchgeführt. Die einzusetzende Menge der Base wird mit 1 - 100 mol-%, bevorzugt 5 - 20 mol-%, bezogen auf DEPI angegeben. In den Beispielen werden zwischen 10 und 80 mol-% Base eingesetzt, wobei die Erhöhung der Basenmenge von 10 auf 80 mol-% die Ausbeute verbesserte. Die Base konnte in Substanz oder als wässrige Lösung eingesetzt werden.

In CN 109021011 A wird die Verwendung von 37 - 38%iger wässriger Formaldehydlösung in Kombination mit Natriumcarbonat oder Kaliumcarbonat vorgeschlagen. Die Menge dieser Basen wird mit 5 - 6 Gew.-% bezogen auf die Menge der Formaldehydlösung beansprucht. Dies entspricht 5,0 bis 6,5 mol-% Base bezogen auf eingesetztes DEPI, wie sich anhand der angeführten Beispiele nachvollziehen lässt.

Das aus CN 109053799 A bekannte Verfahren verwendet ebenfalls wässrige Formaldehydlösung zusammen mit Natriumcarbonat oder Kaliumcarbonat. Die Menge an Base soll 50 bis 220 mol-%, bevorzugt 60 bis 200 mol-%, bezogen auf eingesetztes DEPI betragen. Weiterhin ist hier ein Phasentransferkatalysator erforderlich, der ein quaternäres Ammoniumsalz, ein Polyethylenglycol, ein Polyethylenglycolmonomethylether, oder ein Polyethylenglycoldimethylether sein soll. Die Verwendung eines Phasentransferkatalysators ist nachteilig, weil sie zusätzliche Kosten verursacht und der Phasentransferkatalysator vom Produkt wieder abgetrennt werden muss.

CN 113121596 A offenbart ein dazu sehr änhnliches Verfahren, in dem DEPI mit wässriger Formaldehydlösung und Natriumcarbonat oder Kaliumcarbonat als Base in Gegenwart eines Phasentransferkatalysators umgesetzt wird. Als Phasentransferkatalysator wird Tetrabutylammoniumbromid eingesetzt. Aus den in CN 113121596 A angegebenen Massenverhältnissen von Base zu DEPI ergeben sich für die Gesamtmengen an Base die auf DEPI bezogenen Molverhältnisse 17,5 bis 23,8 mol-% im Falle von Natriumcarbonat und 13,4 bis 18,3 mol-% im Falle von Kaliumcarbonat.

Jede Reaktion von DEPI mit einem wässrigen Reagenz oder in einem wässrigen Lösungsmittel bringt das Problem mit sich, dass neben der gewünschten Reaktion auch die Hydrolyse von DEPI unter Bildung von Monoethylphosphit und Ethanol abläuft. Insbesondere die Verseifung von DEPI im alkalischen Milieu verläuft bereits bei Raumtemperatur rasch und führt zu Salzen des Monoethylphosphits. So ist aus DE 24 56 627 A die Verseifung von DEPI mit Natronlauge unter Bildung von Natriummonoethylphosphit (CAS-Registry-Nummer 39148-16-8, in DE 24 56 627 A als "O-Äthylphosphonat-natrium" bezeichnet) bekannt. Natriummonoethylphosphit zeigt fungizide Wirkung und wird zur Herstellung des entsprechenden Aluminiumsalzes verwendet, das ebenfalls als Fungizid ("Fosetyl-aluminim") Verwendung findet. Laut DE 29 11 516 A wird DEPI in DEPI-haltigen Reaktionmischungen selbst beim schwach alkalischen pH 7,5 bei 75°C in einer Stunde verseift.

Die Verseifung von DEPI während der DEHMP-Synthese ist unerwünscht, da sie nicht nur die Ausbeute mindert, sondern sich die dabei gebildeten Salze bei diversen Anwendungszwecken als störend erweisen und dadurch eine Abtrennung erforderlich machen. Da sie nicht flüchtig sind, werden diese Salze bei der GC-Analyse nicht erfasst, wodurch die beliebteste Bestimmungsmethode der Zusammensetzung eines DEHMP-Rohproduktes fehleranfällig ist.

Die Reinigung von DEHMP ist nach dem Stand der Technik mit erheblichen Herausforderungen verbunden. Die Flüchtigkeit von DEHMP ist so gering, dass für eine Destillation über Kopf hohe Temperaturen und extrem niedrige Drücke erforderlich sind (siehe z. B. Org. Synth., Coll. Vol. 7, p. 160, 1990). Dies stellt bei der Produktion im technischen Maßstab sehr hohe Ansprüche an die einzusetzenden Apparate. Außerdem sind bei den hohen Temperaturen Ausbeuteverluste durch Nebenreaktionen unvermeidbar. Die Reinigung von DEHMP durch Extraktion in einem organisch-wässrigen Lösungsmittelsystem wird durch die hohe Polarität von DEHMP erschwert. DEHMP ist in jedem Verhältnis mit Wasser mischbar und ausgesprochen hydrophil. Ein Maß für die Hydrophilie einer Substanz ist ihr Octanol-Wasser-Verteilungskoeffizient P, der die Verteilung des Stoffes in einem n-Oktanol-Wasser-System beschreibt. Laut SciFinder wird der Octanol-Wasser-Verteilungskoeffizienten von DEHMP mit 0,13 abgeschätzt (logP = -0,90 ± 0,36, modelliert mit ACD/Labs Software V11.02). Da DEHMP sich demzufolge in einem zweiphasigen, organisch-wässrigen Lösungsmittelsystem eher in der wässrigen als in der organischen Phase löst, ist eine Extraktion im organisch-wässrigen Lösungsmittelsystem zur Abtrennung von wasserlöslichen Salzen ausgesprochen ineffizient. Darüber hinaus werden dafür nach dem Stand der Technik problematische Lösungsmittel eingesetzt, wie das giftige und vermutlich krebserregende Chloroform (siehe CN 103073747 A).

Die Aufgabe der vorliegenden Erfindung bestand daher darin, ein Verfahren zur Herstellung von DEHMP bereit zu stellen, welches die obigen Nachteile des Stands der Technik ganz oder teilweise vermeidet. Bevorzugt sollte das Verfahren einen kostengünstigen, toxikologisch unbedenklichen Katalysator verwenden und schon vor einer Reinigung eine höhere Produktreinheit als die Verfahren aus dem Stand der Technik erreichen.

Überraschenderweise wurde gefunden, dass sich DEHMP in hoher Reinheit herstellen lässt, wenn man zur Umsetzung von DEPI mit wässriger Formaldehydlösung bestimmte anorganische Basen in einer bestimmten Menge einsetzt. Vergleichsversuche zeigen, dass DEHMP dabei auch ohne aufwändige Reinigungsoperationen in deutlich höherer Reinheit als in bekannten Verfahren erhalten wird.

Gegenstand der Erfindung ist ein Verfahren zur Herstellung von DEHMP durch Umsetzung von DEPI mit wässriger Formaldehydlösung, dadurch gekennzeichnet, dass die Umsetzung in Gegenwart einer Base ausgewählt aus der Gruppe bestehend aus Natriumcarbonat, Kaliumcarbonat, Natriumphosphat und Kaliumphosphat in einer Menge von 2 bis 4 mol-% bezogen auf die eingesetzte Menge DEPI durchgeführt wird.

Die wässrige Formaldehydlösung hat eine Formaldehydkonzentration von 10 bis 60 Gew.-%. Bevorzugt beträgt ihre Konzentration 20 bis 50 Gew.-%, besonders bevorzugt beträgt sie 30 bis 40 Gew.-%. Die wässrige Formaldehydlösung kann neben Wasser, Formaldehyd und seinen bekannten hydratisierten Oligo- und Polymeren weitere Bestandteile enthalten, wie beispielsweise Methanol. Darüber hinaus kann die wässrige Formaldehydlösung Feststoffpartikel bestehend aus Oligo- und Polymeren des Formaldehyds enthalten. Bei der wässrigen Formaldehydlösung handelt es sich um das gegebenenfalls verdünnte Reaktionsprodukt der industriell betriebenen Methanoloxidation. Die Lösung kann aber auch dadurch zubereitet werden, dass eine formaldehydbildende Substanz, wie beispielsweise Paraformaldehyd oder 1,3,5-Trioxan, in Wasser aufgelöst wird.

Das Molverhältnis von Formaldehyd zu DEPI kann zwischen 1,0 und 2,0 variieren und liegt vorzugsweise zwischen 1,0 und 1,2. Besonders bevorzugt werden 1,0 bis 1,1 mol Formaldehyd auf 1 mol DEPI eingesetzt.

Die als Basen eingesetzten Verbindungen Natriumcarbonat, Kaliumcarbonat, Natriumphosphat und Kaliumphosphat werden einzeln oder als Mischung verschiedener Basen eingesetzt. Bevorzugt wird nur eine der genannten Basen allein eingesetzt. Besonders bevorzugt wird Natriumcarbonat eingesetzt.

Die Basen können als wasserfreie oder kristallwasserhaltige Feststoffe oder als wässrige Lösungen in das Verfahren eingesetzt werden. Bevorzugt werden die wässrigen Lösungen eingesetzt. Die Konzentration der Basen in den wässrigen Lösungen beträgt von 5 bis 60 Gew.-%, bevorzugt 10 bis 50 Gew.-%, besonders bevorzugt von 15 bis 40 Gew.-%, jeweils bezogen auf kristallwasserfreie Basen.

Die Menge der in das Verfahren einzusetzenden Basen beträgt von 2 bis 4 mol-% bezogen auf die eingesetzte Menge DEPI. Zur Berechnung dieses Molverhältnisses werden die Mengen an wasserfreien Basen zugrunde gelegt, unabhängig davon, ob die Basen wasserfrei oder wasserhaltig eingesetzt werden. Bevorzugt werden von 2.0 bis 3.8 mol-% Base und besonders bevorzugt 2.3 bis 3,7-mol-% Base eingesetzt.

Das erfindungsgemäße Verfahren wird durchgeführt, indem man die genannten Rohstoffe in einem geeigneten Reaktor bei einer Temperatur von 5 bis 85°C in Kontakt miteinander bringt. Bevorzugt wird dies unter Durchmischung vorgenommen. Bevorzugt wird das Verfahren bei 15 bis 75°C durchgeführt, besonders bevorzugt wird es bei 25 bis 65°C durchgeführt. Die erforderliche Verweilzeit bei der gewählten Reaktionstemperatur kann leicht anhand der abklingenden Reaktionswärme oder mittels analytischer Methoden ermittelt werden. Geeignete analytische Methoden sind beispielsweises die Gaschromatographie, die Hochleistungs-Flüssigchromatographie oder die NMR-Spektroskopie.

Die Rohstoffe können gemeinsam im Reaktor vorgelegt oder in beliebiger Reihenfolge nacheinander in den Reaktor dosiert werden. In einer bevorzugten Variante des Verfahrens wird die wässrige Formaldehydlösung vorgelegt und DEPI zudosiert. Die Base kann dabei zusammen mit dem Paraformaldehyd vorgelegt werden, oder nachträglich allein oder zusammen mit dem Diethylphosphit zudosiert werden. Bevorzugt wird die Base vorgelegt.

Bevorzugt wird die Reaktion durchgeführt, bis 90 % oder mehr des eingesetzten Diethylphosphits in Diethylhydroxymethylphosphonat umgewandelt wurden. Die Bestimmung des Umsatzes kann dabei mittels ³¹P-NMR-Spektroskopie erfolgen.

Bevorzugt wird die Reaktion durchgeführt, bis der Restgehalt an Diethylphosphit in der Reaktionsmischung - bestimmt mittels ³¹P-NMR-Spektroskopie - weniger als 2 %, vorzugsweise weniger als 1% beträgt.

Das Verfahren kann ansatzweise oder kontinuierlich durchgeführt werden. In der ansatzweisen Durchführung wird beispielsweise ein üblicher Rührkessel verwendet. Für eine kontinuierliche Durchführung bietet sich zum Beispiel eine Rührkesselkaskade an.

Das erfindungsgemäße Verfahren kann außer der Synthese auch aus dem Stand der Technik bekannte Aufarbeitungsschritte und Trennoperationen umfassen. Beispiele dafür sind Filtration, Membrantechnik, Ionenaustausch, Extraktion, Adsorption oder Destillation gegebenenfalls unter vermindertem Druck. Bevorzugt umfasst die Reinigung nach der Umsetzung keine Extraktion des Diethylhydroxymethylphosphonats mit einem organischen Lösungsmittel aus der wässrigen Phase.

In einer bevorzugten Ausführungsform des Verfahrens wird nach der Synthese das in der Reaktionsmischung enthaltene Wasser durch geeignete Trennoperationen bis auf einen Restgehalt von 1 Gew.-% oder weniger, besonders bevorzugt von 0,5 Gew.-% oder weniger abgetrennt.

Das erfindungsgemäße Verfahren ermöglicht es, auf einfache Weise und mit minimalem Rohstoffeinsatz zu Zusammensetzungen zu gelangen, deren phosphorhaltigen Bestandteile zu mindestens 90 mol-% aus Diethylhydroxymethylphosphonat bestehen.

Durch das erfindungsgemäße Verfahren sind auch ohne aufwändige Reinigung nach der Umsetzung Zusammensetzungen erhältlich, bei denen die phosphorhaltigen Bestandteile der Zusammensetzung zu mindestens 90 mol-% aus Diethylhydroxymethylphosphonat und zu weniger als 2 %, vorzugsweise weniger als 1 % aus Diethylphosphit bestehen.

Erstaunlicherweise wurde festgestellt, dass solche Zusammensetzungen vorteilhaft einsetzbar sind für Anwendungen, bei denen die bei den Synthesen gemäß des Stands der Technik in der Reaktionsmischung anfallenden Verunreinigungen wie Nebenprodukte, Startmaterialien und basischen Katalysatoren einen direkten Einsatz in Anwendungen verhindern und somit aufwändige Reinigungsschritte erfordern, wie zum Beispiel bei der Anwendung als Flammschutzadditiv in Kunststoffen, welches bereits vor oder während der Polymerisation zugegeben wird.

Somit sind auch die obigen Zusammensetzungen Gegenstand der Erfindung.

Anhand der nachfolgenden Beispiele wird die Erfindung näher erläutert, ohne dass dadurch eine Einschränkung der Erfindung bewirkt werden soll.

### Beispiele

Die Zusammensetzung der phosphorhaltigen Bestandteile in den Reaktionsmischungen wurde mittels ³¹P-NMR-Spektroskopie ermittelt. Die NMR-Messungen wurden an einem Spektrometer der Marke Spinsolve^{™} 80 Phosphorus des Herstellers Magritek bei einer Messfrequenz von 32,4 MHz durchgeführt. Die Proben der Reaktionsmischungen wurden unverdünnt gemessen. Die Signale von DEHMP und DEPI wurden anhand der Spektren authentischer Reinproben zugeordnet. Neben den Signalen der beiden genannten Bestandteile wurden in den Reaktionsmischungen stets auch weitere Signale beobachtet, die jedoch keinen Verbindungen sicher zugeordnet werden konnten. Zur Quantifizierung wurden protonenentkoppelte Spektren herangezogen. Unter der Annahme, dass der Reaktionsmischung während der Reaktionsdauer keine phosphorhaltigen Bestandteile verloren gehen, entspricht die Summe der Integrale aller Signale 100 mol-% des im eingesetzten DEPI enthaltenen Phosphors. Aus dem Anteil an DEHMP leitet sich also direkt die Ausbeute bezogen auf DEPI und aus dem Anteil an DEPI der Umsatz ab.

Natriumcarbonat, Kaliumcarbonat und Kaliumphosphat wurden von der Firma VWR International GmbH als wasserfreie Produkte bezogen und vor den Versuchen für 16 h bei 120°C im Trockenschrank getrocknet. Das verwendete DEPI war ein Handelsprodukt der Lanxess Deutschland GmbH. 37%ige wässrige Formaldehydlösung wurde von Acros bezogen. Eine Vergleichsprobe von DEHMP wurden von Sigma-Aldrich bezogen.

### Vergleichsbeispiel 1 (nicht erfindungsgemäß)

In einem 250 ml-Vierhalskolben mit Heizmantel, Thermometer, mechanischem Rührer, Tropftrichter und Rückflusskühler wurden 47,3 g 37%ige wässrige Formaldehydlösung und 4,2 g (0,039 mol, 6,8 mol-% bzgl. DEPI) Natriumcarbonat vorgelegt und auf 60°C erhitzt. Unter Rühren wurden aus dem Tropftrichter 80,0 g (0,58 mol) DEPI zugetropft. Die erhaltene Reaktionsmischung wurde 2 h bei 60°C gerührt. Nach Abkühlen und Filtrieren wurde mittels ³¹P-NMR die Zusammensetzung der phosphorhaltigen Bestandteile ermittelt: 83,0 mol-% DEHMP, 0,0 mol-% DEPI, 17,0 mol-% unbekannte Nebenprodukte.

### Vergleichsbeispiel 2 (nicht erfindungsgemäß)

In einem 250 ml-Vierhalskolben mit Heizmantel, Thermometer, mechanischem Rührer, Tropftrichter und Rückflusskühler wurden 47,3 g 37%ige wässrige Formaldehydlösung und 4,05 g (0,030 mol, 5,1 mol-% bzgl. DEPI) Kaliumcarbonat vorgelegt und auf 35°C erhitzt. Unter Rühren wurden aus dem Tropftrichter 80,0 g (0,58 mol) DEPI zugetropft. Die erhaltene Reaktionsmischung wurde 2 h bei 60°C gerührt. Nach Abkühlen und Filtrieren wurde mittels ³¹P-NMR die Zusammensetzung der phosphorhaltigen Bestandteile ermittelt: 89,7 mol-% DEHMP, 0,0 mol-% DEPI, 10,3 mol-% unbekannte Nebenprodukte.

### Vergleichsbeispiel 3 (nicht erfindungsgemäß)

In einem 1000 ml-Vierhalskolben mit Heizmantel, Thermometer, mechanischem Rührer, Tropftrichter und Rückflusskühler wurden 373,8 g 32%ige wässrige Formaldehydlösung und 5,99 g (0,057 mol, 1,5 mol-% bzgl. DEPI) Natriumcarbonat vorgelegt und auf 45°C erhitzt. Unter Rühren wurden aus dem Tropftrichter 528,0 g (3,82 mol) DEPI zugetropft. Die erhaltene Reaktionsmischung wurde in 1 h auf 60°C erhitzt und dann 2 h bei 60°C gerührt. Nach Abkühlen und Filtrieren wurde mittels ³¹P-NMR die Zusammensetzung der phosphorhaltigen Bestandteile ermittelt: 89,0 mol-% DEHMP, 2,6 mol-% DEPI, 8,4 mol-% unbekannte Nebenprodukte.

### Beispiel 1

In einem 1000 ml-Planschliff-Glasreaktor, dessen Glasmantel über einen Thermostaten beheizbar war und der mit Thermometer, mechanischem Rührer, Dosierpumpe und Rückflusskühler ausgestattet war, wurden 189,2 g 37%ige wässrige Formaldehydlösung und 60,12 g (0,085 mol, 3,7 mol-% bzgl. DEPI) 15%ige wässrige Natriumcarbonatlösung vorgelegt und auf 60°C erwärmt. 320,0 g (2,32 mol) DEPI wurde zudosiert. Die erhaltene Reaktionsmischung wurde 2 h bei 60°C gerührt. Nach dem Abkühlen und Filtrieren wurde eine Probe der Reaktionsmischung gezogen und die Zusammensetzung der phosphorhaltigen Komponenten mittels ³¹P-NMR bestimmt: 91,6 mol-% DEHMP, 0,0 mol-% DEPI, 8,4 mol-% unbekannte Nebenprodukte.

### Beispiel 2

In einem 1000 ml-Planschliff-Glasreaktor, dessen Glasmantel über einen Thermostaten beheizbar war und der mit Thermometer, mechanischem Rührer, Dosierpumpe und Rückflusskühler ausgestattet war, wurden 189,2 g 37%ige wässrige Formaldehydlösung und 59,37 g (0,084 mol, 3,6 mol-% bzgl. DEPI) 30%ige wässrige Kaliumphosphatlösung vorgelegt und auf 45°C erwärmt. 320,0 g (2,32 mol) DEPI wurde zudosiert. Die erhaltene Reaktionsmischung wurde auf 60°C erhitzt und 5 h bei 60°C gerührt. Nach dem Abkühlen und Filtrieren wurde eine Probe der Reaktionsmischung gezogen und die Zusammensetzung der phosphorhaltigen Komponenten mittels ³¹P-NMR bestimmt: 92,7 mol-% DEHMP, 0,4 mol-% DEPI, 6,9 mol-% unbekannte Nebenprodukte.

### Beispiel 3

Wie in Beispiel 2 wurde eine Reaktionsmischung hergestellt, jedoch wurde als Base 106,5 g (0,075 mol, 3,3 mol-%) 15%ige wässrige Kaliumphosphatlösung eingesetzt. Die Zusammensetzung der phosphorhaltigen Komponenten in der Reaktionsmischung wurde mittels ³¹P-NMR bestimmt: 91,7 mol-% DEHMP, 0,3 mol-% DEPI, 6,9 mol-% unbekannte Nebenprodukte.

### Beispiel 4

In einem 1000 ml-Planschliff-Glasreaktor, dessen Glasmantel über einen Thermostaten beheizbar war und der mit Thermometer, mechanischem Rührer, Dosierpumpe und Rückflusskühler ausgestattet war, wurden 189,2 g 37%ige wässrige Formaldehydlösung und 46,0 g (0,065 mol, 2,8 mol-% bzgl. DEPI) 15%ige wässrige Natriumcarbonatlösung vorgelegt und auf 35°C erwärmt. 320,0 g (2,32 mol) DEPI wurde zudosiert. Die erhaltene Reaktionsmischung wurde 8 h bei 35°C gerührt. Nach dem Abkühlen und Filtrieren wurde eine Probe der Reaktionsmischung gezogen und ihre Zusammensetzung mittels ³¹P-NMR bestimmt: 91,7 mol-% DEHMP, 0,7 mol-% DEPI, 7,6 mol-% unbekannte Nebenprodukte.

### Auswertung

Die Vergleichsbeispiele 1 und 2 entsprechen dem aus CN 109021011 A bekannten Verfahren. Die ³¹P-NMR-Analyse zeigt, dass sich erhebliche Mengen nicht identifizierter Nebenprodukte bilden. Daher bleibt die DEHMP-Ausbeute unter 90 %.

In den erfindungsgemäßen Beispielen hingegen wurde unter vergleichbaren Reaktionsbedingungen, mit der Kombination aus spezifischen Basen und verringerter Menge in Bezug auf DEPI deutlich bessere DEHMP-Ausbeuten von über 90 % erzielt. Überraschender Weise wird also nicht nur Base eingespart, sondern auch eine bessere Ausbeute erzielt.

## Patentansprüche

1. Verfahren zur Herstellung von Diethylhydroxymethylphosphonat durch Umsetzung von Diethylphosphit mit wässriger Formaldehydlösung, **dadurch gekennzeichnet, dass** die Umsetzung in Gegenwart mindestens einer Base ausgewählt aus der Gruppe bestehend aus Natriumcarbonat, Kaliumcarbonat, Natriumphosphat und Kaliumphosphat in einer Menge von 2 bis 4 mol-% bezogen auf die eingesetzte Menge DEPI durchgeführt wird.

2. Verfahren gemäß Anspruch 1, **dadurch gekennzeichnet, dass** die Formaldehydkonzentration der wässrigen Formaldehydlösung von 10 bis 60 Gew.-%, bevorzugt von 20 bis 50 Gew.-% und besonders bevorzugt von 30 bis 40 Gew.-% beträgt.

3. Verfahren gemäß einem oder mehreren der Ansprüche 1 und 2, **dadurch gekennzeichnet, dass** die wässriger Formaldehydlösung in einer Menge eingesetzt wird, die unter Berücksichtigung ihres Formaldehydgehaltes von 1,0 bis 2,0, bevorzugt von 1,0 bis 1,2 mol und besonders bevorzugt von 1,0 bis 1,1 mol bezogen auf 1 mol Diethylphosphit entspricht.

4. Verfahren gemäß einem oder mehreren der Ansprüche 1 bis 3, **dadurch gekennzeichnet, dass** als Base Natriumcarbonat eingesetzt wird.

5. Verfahren gemäß einem oder mehreren der Ansprüche 1 bis 4, **dadurch gekennzeichnet, dass** die Base in Form einer wässrigen Lösung mit einer Konzentration von 5 bis 60 Gew.-%, bevorzugt 10 bis 50 Gew.-%, besonders bevorzugt von 15 bis 40 Gew.-%, bezogen auf die kristallwasserfreien Basen, eingesetzt wird.

6. Verfahren gemäß einem oder mehreren der Ansprüche 1 bis 5, **dadurch gekennzeichnet, dass** die Base in einer Menge von 2.0 bis 3.8 mol-%, bevorzugt von 2.3 bis 3,7 mol-%, jeweils bezogen auf die verwendete Menge an DEPI eingesetzt wird.

7. Verfahren gemäß einem oder mehreren der Ansprüche 1 bis 6, **dadurch gekennzeichnet, dass** es bei einer Reaktionstemperatur von 5 bis 85°C, bevorzugt 15 bis 75°C und besonders bevorzugt 25 bis 65°C durchgeführt wird.

8. Verfahren gemäß einem oder mehreren der Ansprüche 1 bis 7, **dadurch gekennzeichnet, dass** die wässrige Formaldehydlösung in einem Reaktor vorgelegt wird und Diethylphosphit dazu dosiert wird.

9. Verfahren gemäß einem oder mehreren der Ansprüche 1 bis 8, **dadurch gekennzeichnet, dass** die wässrige Formaldehydlösung und die Base in einem Reaktor vorgelegt werden und Diethylphosphit dazu dosiert wird.

10. Verfahren gemäß einem oder mehreren der Ansprüche 1 bis 9, **dadurch gekennzeichnet, dass** im Anschluss an die an die Umsetzung das Wasser ganz oder teilweise durch Destillation abgetrennt wird.

11. Verfahren gemäß einem oder mehreren der Ansprüche 1 bis 10, **dadurch gekennzeichnet, dass** die Reaktion durchgeführt wird, bis 90% oder mehr - bestimmt mittels ³¹P-NMR-Spektroskopie - des eingesetzten Diethylphosphits in Diethylhydroxymethylphosphonat umgewandelt wurden.

12. Verfahren gemäß einem oder mehreren der Ansprüche 1 bis 11, **dadurch gekennzeichnet, dass** die Reaktion durchgeführt wird, bis der Restgehalt an Diethylphosphit in der Reaktionsmischung - bestimmt mittels ³¹P-NMR-Spektroskopie - weniger als 2%, vorzugsweise weniger als 1% beträgt.

13. Verfahren gemäß einem oder mehreren der Ansprüche 1 bis 12, **dadurch gekennzeichnet, dass** im Anschluss an die Umsetzung keine Reinigung durch Extraktion des Diethylhydroxymethylphosphonats mit einem organischen Lösungsmittel aus der wässrigen Phase erfolgt.

14. Zusammensetzung erhältlich durch Reaktion von Diethylphosphit mit Paraformaldehyd und Natriumcarbonat gemäß einem oder mehreren der Ansprüche 1 bis 13, **dadurch gekennzeichnet, dass** die phosphorhaltigen Bestandteile der Zusammensetzung zu mindestens 90 mol-% aus Diethylhydroxymethylphosphonat und zu weniger als 2%, vorzugsweise weniger als 1% aus Diethylphosphit bestehen.

15. Verwendung von Zusammensetzungen gemäß Anspruch 14 als Flammschutzadditiv in Kunststoffen, welches bereits vor oder während der Polymerisation zugegeben wird.
